(19) Europäisches Patentamt
European Patent Office
Office européen des brevets

(11) **EP 2 371 783 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**27.04.2022 Patentblatt 2022/17**

(45) Hinweis auf die Patenterteilung:
**11.03.2015 Patentblatt 2015/11**

(21) Anmeldenummer: **11152622.4**

(22) Anmeldetag: **28.01.2011**

(51) Internationale Patentklassifikation (IPC):
**C04B 38/02** [(2006.01)]   **C04B 28/18** [(2006.01)]

(52) Gemeinsame Patentklassifikation (CPC):
(C-Sets verfügbar)
**C04B 28/18; C04B 38/02;** C04B 2201/32;
C04B 2201/50; Y02W 30/91   (Forts.)

(54) **Porenbetonformkörper sowie Verfahren zu seiner Herstellung**

Porous concrete moulded part and method for its manufacture

Corps de formage en béton poreux et son procédé de fabrication

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.04.2010 DE 102010013667**

(43) Veröffentlichungstag der Anmeldung:
**05.10.2011 Patentblatt 2011/40**

(73) Patentinhaber: **Xella Technologie- und Forschungsgesellschaft mbH 14797 Kloster Lehnin (DE)**

(72) Erfinder:
• **Der Erfinder hat auf sein Recht verzichtet, als solcher bekannt gemacht zu werden.**

(74) Vertreter: **Dr. Solf & Zapf Patent- und Rechtsanwalts PartG mbB Candidplatz 15 81543 München (DE)**

(56) Entgegenhaltungen:

| | |
|---|---|
| EP-A1- 0 628 523 | EP-A1- 0 628 523 |
| EP-A1- 2 163 534 | EP-A1- 2 163 534 |
| EP-A2- 1 688 401 | EP-A2- 1 688 401 |
| WO-A1-2009/121635 | WO-A1-2009/121635 |
| DE-A1- 4 316 307 | DE-A1- 10 041 368 |
| DE-A1- 10 041 368 | DE-A1- 10 131 360 |
| DE-A1- 10 131 360 | DE-A1- 19 607 814 |
| DE-A1-102005 033 454 | DE-B- 1 060 771 |
| DE-B4- 10 066 270 | DE-B4- 10 066 270 |
| DE-C- 722 094 | DE-C- 823 723 |
| DE-T2- 60 127 307 | DE-T2- 69 922 803 |
| DE-U1-202004 019 019 | GB-A- 2 259 700 |
| GB-A- 2 259 700 | US-A- 4 129 450 |

US-A- 4 129 450

• **HORST REUL: In: Horst Reul: "Handbuch Bauchemie - Einführung in die Grundlagen - Rohstoffe, Rezepturen", 1991, Verlag für chem. Industrie ISBN: 3-87846-143-7 pages 5-13,266-267,**
• **H. KITTEL et al.: In: Kittel H.: "Lehrbuch der Lacke und Beschichtungen", 2007, S. Hirzel Verlag, Stuttgart ISBN: 978-3-7776-1014-6 vol. 4, pages 284-291,298,**
• **Jens Uwe Pott: "Entwicklungsstrategie für zementgebundene Schäume", Dissertation, 2006, Universität Hannover**
• **MARTIN HOMANN: "Porenbeton-Handbuch", vol. 6, 2008, BAUVERLAG-GÜTERSLOH, pages: 2-26,81 - 84**
• **ERNST SCHLEGEL ET AL.: "Porenbeton - Die Entwicklung von Gefüge und Eigenschaften eines Werkstoffes", MAUERWERK, vol. 6, no. 3, May 2002 (2002-05-01), pages 82 - 88**
• **Dr. Otto-Albrecht Neumüller: Römpps Chemie-Lexikon, Achte, neubearbeitete und erweiterte Auflage**
• **Wikipedia: "Stokessche Gleichung"**
• **Produktdatenblatt "Saduren 163"**
• **Chemie.de: Lexikon "Polyethylenglykol"**
• **"Thickening agents/Viscosity modifiers" in "Lea's Chemistry of Cement & Concrete"**
• **DIN 4108-4, "Wärmeleitfähigkeit" aus Wissen-Wiki**
• **Datenblatt „Planstein PP-2 0.350"**
• **Dtaenblatt „Porit Porenbeton PP2-0,35"**
• **„PP2-0,40" de Firma SOLBET GmbH**
• **Datenblatt „ Porit Porenbeton PP4-0,60"**

EP 2 371 783 B2

(52) Gemeinsame Patentklassifikation (CPC): (Forts.)

C-Sets
**C04B 28/18, C04B 14/062, C04B 14/28,
C04B 18/16, C04B 22/04, C04B 22/143,
C04B 24/2647, C04B 24/305, C04B 24/32,
C04B 24/38, C04B 38/02, C04B 40/024;
C04B 28/18, C04B 14/062, C04B 14/28,
C04B 22/04, C04B 22/143, C04B 38/02,
C04B 38/08, C04B 40/024, C04B 2103/0082,
C04B 2103/30;
C04B 38/02, C04B 28/18**

**Beschreibung**

Die Erfindung betrifft ein Verfahren zur Herstellung von Porenbetonformkörpern.

Porenbetonformkörper im Sinne der Erfindung sind unbewehrte Porenbetonplansteine oder Porenbetonplanelemente.

Porenbetonformkörper sind geformte Mauerwerksprodukte aus Porenbeton mit genormten Festigkeitsklassen. Es gibt derzeit die genormten Festigkeitsklassen 2, 4, 6 und 8, was bedeutet, dass die Druckfestigkeit der Porenbetonformkörper einer Festigkeitsklasse die jeweilige Festigkeit gemessen in $N/mm^2$ von 2, 4, 6 oder 8 nicht unterschreiten darf.

Jeder Festigkeitsklasse sind mehrere Rohdichteklassen zugeordnet. Diese maximalen Rohdichten liegen für die Festigkeitsklasse 2 zwischen 350 und 500, für die Festigkeitsklasse 4 zwischen 500 und 800, für die Festigkeitsklasse 6 zwischen 650 und 800 und für die Festigkeitsklasse 8 bei 800 $kg/m^3$.

Den Festigkeitsklassen und Rohdichten sind auch jeweils eine Wärmeleitfähigkeitsklasse zugeordnet, und zwar für die Festigkeitsklasse 2 zwischen 0,09 und 0,12, für die Festigkeitsklasse 4 zwischen 0,12 und 0,21, für die Festigkeitsklasse 6 zwischen 0,16 und 0,21 und für die Festigkeitsklasse 8 bei 0,21 W/(mK).

Aus einem rechnerischen Bezug der Druckfestigkeit zur Rohdichte ergibt sich die dimensionslose sogenannte A-Zahl. Sie repräsentiert die relative Druckfestigkeit der Porenbetonformkörper. Je größer die A-Zahl ist, desto besser ist das Druckfestigkeitsniveau; sie wird wie folgt berechnet:

$$\text{A-Zahl} = \text{Druckfestigkeit } (N/mm^2) : [\text{Rohdichte } (kg/dm^3)^2 \cdot 0{,}016]$$

Die A-Zahl wird beschrieben von Siegfried G. Zürn in "Einfluss der Sandminerale auf die Bildung von Calciumsilikathydraten (CSH-Phasen), das Gefüge und die mechanischen Eigenschaften von Porenbetonprodukten", ISBN 978-3-89722-012-6, 1997.

Die A-Zahl liegt bei den oben genannten Festigkeitsklassen zwischen 800 und maximal 1600.

Die EP 2 163 534 A1 offenbart einen Porenbetonformkörper, der eine Steindruckfestigkeit von mindestens 2,5 $N/mm^2$ und eine Wärmeleitfähigkeit von höchstens 0,09 W/(mK), insbesondere von höchstens 0,08 W/(mK) und vorzugsweise eine Rohdichte zwischen 300 und 400 $kg/m^3$, insbesondere zwischen 320 und 380 $kg/m^3$ aufweist. Des Weiteren offenbart die EP 2 163 534 A1 ein Verfahren zur Herstellung des Porenbetonformkörpers, wobei als $SiO_2$-Komponente ein Quarzmehl mit einer spezifischen Oberfläche von mindestens 6000 $cm^2/g$, gemessen nach Blaine verwendet wird. Dabei werden Wasser/Feststoffwerte zwischen 0,7 und 0,95, insbesondere zwischen 0,75 und 0,85, verwendet.

Unbewehrte Porenbetonformteile genormter Güteklassen bzw. Festigkeitsklassen werden derzeit grundsätzlich mit sogenannten Zementrezepturen hergestellt. Dabei wird eine gießfähige Masse meist aus gebranntem Kalk als CaO-Komponente, Zement, Quarzmehl als $SiO_2$-Komponente, Calciumsulfat und einer Aluminiumkomponente (Treibmittel) und Wasser zusammen gemischt und in eine Form gegossen. In der Form treibt die Masse auf und steift zu einem so genannten grünen Kuchen an. Teilweise wird der Einsatz von Wasser in der Mischung durch den Einsatz von Fließmitteln reduziert. Der grüne Kuchen wird in der Regel in Formkörper geschnitten und die Formkörper im Autoklaven gehärtet.

Aus der DE 601 27 307 T2 ist bekannt, bei Verwendung von sehr feinen kristallinen $SiO_2$-Komponenten durch den Zusatz von Aluminiumsulfat mit hohen Wasser/Feststoffwerten die Sedimentation zu verhindern und Aluminium getriebene Porenbetonformkörper mit relativ hoher Festigkeit bei niedrigen Rohdichten zu erzielen. Die Errechnung der A-Zahl ergibt Werte über 1600. Ein Problem bei den hohen Wasser-/Feststoffwerten aber ist die Sedimentationsneigung von Feststoffen in der Gießmasse. Die Sedimentation soll bekämpft werden mit einer zusätzlichen Verwendung von nicht-kristallinen feinen $SiO_2$-Komponenten oder einer zusätzlichen Sulfatkomponente oder durch lange Mischzeiten oder durch vorgegebene Mischreihenfolgen oder durch Erhöhung der Temperatur in der Gießmasse. Des Weiteren wird offenbart, dass zusätzlich beliebige Zusatzmittel u. a. auch Verdickungsmittel wie Methylcellulose oder Polyacrylsäure und Dispergiermittel verwendet werden können. Die Verwendung von Aluminiumsulfat hat den Nachteil, dass dieses in wässriger Lösung stark sauer reagiert (pH-Wert liegt bei ungefähr 3). Dies hat eine verstärkte Korrosion der Anlagentechnik zur Folge. Bei bestimmten Dosierreihenfolgen der Rohstoffe in den Mischer, bewirkt das saure Milieu zudem bei carbonathaltigen Zuschlagstoffen (z.B. Kalksteinmehl) eine $CO_2$-Abspaltung und ein daraus resultierendes Aufschäumen der Gießmasse.

Aufgabe der Erfindung ist die Bereitstellung eines Verfahrens zur Herstellung eines unbewehrten, Aluminium getriebenen Porenbetonformkörpers mit einem relativen Druckfestigkeitsniveau, der A-Zahl, von über 1600 und mit einer Wärmeleitfähigkeit $\leq$ 0,085 W/mK, ohne Verwendung von Aluminiumsulfat und mit im Vergleich zum Stand der Technik erhöhtem Wasser/Feststoffwert.

Diese Aufgabe wird durch die Merkmale von Anspruch 1 gelöst. Vorteilhafte Ausführungsformen der Erfindung werden in den von Anspruch 1 abhängigen Unteransprüchen gekennzeichnet.

Mit der Erfindung gelingt es, mit einem Zusatzmittel, das normalerweise als Sedimentationshemmer bzw. Sedimentationsreduzierer für selbst verdichtende Betone verwendet wird, Porenbetonformkörper mit einer A-Zahl über 1600 zu erzeugen. Bei selbst verdichtenden Betonen sollen die Sedimentationshemmer das Absinken der großen Gesteinskörner im Frischbeton verhindern. In einer Mischung zur Herstellung von Porenbeton herrschen allerdings andere Bedingungen, weshalb nicht ohne weiteres erkennbar ist, dass die für selbst verdichtenden Beton verwendbaren Sedimentationshemmer auch in Porenbetonmischungen wirken. Diese erfindungsgemäß verwendeten Zusatzmittel sind Polysaccharide und/oder Polyethylenglycol und/oder Polyethylenoxid und/oder Melaminharzderivate. Sie werden erfindungsgemäß zugesetzt in Mengen bis 2, insbesondere 0,2 bis 0,8 Gew.-%, bezogen auf den Feststoffgehalt der Gießmasse.

Das Zusatzmittel allein führt aber noch nicht zu erfindungsgemäßen Porenbetonformkörpern. In Kombination mit dem Zusatzmittel wird eine $SiO_2$-Komponente verwendet mit spezifischen Oberflächen zwischen 8000 und 30000, insbesondere zwischen 10000 und 12000 $cm^2$/g gemessen nach Blaine. Diese $SiO_2$-Komponente ist insbesondere Quarzmehl. Zusätzlich können aber noch andere, an sich bekannte $SiO_2$-Komponenten verwendet werden, sofern sie im gleichen Feinheitsbereich liegen und die Sedimentation nicht negativ beeinflussen. Dies sind z.B. Flugaschen und/oder Mikrosilika und/oder Kieselgur.

Als weiteres Kombinationsmerkmal der Erfindung ist die Einstellung eines Wasser/Feststoffwertes zwischen 1,0 und 1,4 erforderlich.

Mit diesen kombinierten Merkmalen gelingt es, Porenbetonformkörper mit A-Zahlen über 1600 bei Wärmeleitfähigkeiten $\leq 0,085$ W/(mK) herzustellen, wobei alle übrigen Parameter der Porenbetonherstellung wie die übrige übliche Rezeptur betreffend die CaO-Komponente, die Zementkomponente, die Gipskomponente und die Aluminiumkomponente im Wesentlichen gleich bleiben können. Demgemäß weisen erfindungsgemäße Rezepturen z.B. die folgenden Zusammensetzungen auf:

| | Gew.-% | insbesondere Gew.-% |
|---|---|---|
| CaO-Komponente | 30 - 55 | 35 - 45 |
| $SiO_2$-Komponente | 40 - 65 | 30 - 50 |
| inerter Füllstoff (z.B. Kalksteinmehl) | 0 - 20 | 0 - 10 |
| Porenbetonmehl- und/oder -splitt (trocken) | 0 - 20 | 0 - 10 |
| Porenbetonrohstoffrückschlamm (trocken) | 0 - 30 | 0 - 10 |
| Calciumsulfat (z.B. Gips,Anhydrit) | 0 - 7 | 3 - 5 |
| Aluminiumkomponente | 0,1 - 2 | 0,15 - 0,25 |
| Fließmittel (z.B. Polycarboxylatether) | 0 - 2,5 | 0 - 1 |
| Mittel zur Verhinderung der Sedimentation (Polysaccaride, Polyethylenglycol, Polyethylenoxid, Melaminharzderivate) | 0,1 - 2 | 0,2 - 0,8 |

Das Gießen der Frischmasse zur Herstellung von Porenbeton in eine Form sowie das Schneiden zu Formkörpern und das Autoklavieren entspricht den üblichen Verfahrensschritten zur Herstellung von Porenbetonformkörpern genormter Festigkeitsklassen.

Mit dem erfindungsgemäßen Verfahren lassen sich somit Porenbetonformkörper mit folgenden Eigenschaften erzeugen:

Rohdichte: von 240 bis 260 kg/$m^3$
Druckfestigkeit: von 2,0 bis 2,6 N/$mm^2$
Wärmeleitfähigkeit: von 0,068 bis 0,072 W/(mK)

Zudem kann bei einem Absenken der Druckfestigkeit auf Werte von 1,6 bis 2,0 N/$mm^2$ die Rohdichte noch weiter abgesenkt werden. In der Folge reduziert sich auch die Wärmeleitfähigkeit weiter.

**Patentansprüche**

1. Verfahren zur Herstellung eines unbewehrten, Aluminium getriebenen Porenbetonformkörpers ohne Verwendung von Aluminiumsulfat, im Wesentlichen bestehend aus einem Calciumsilikathydratstegerüst, insbesondere einem Tobermoritstegerüst, und Poren sowie aufweisend als ein relatives Druckfestigkeitsniveau eine A-Zahl von über 1600, eine Wärmeleitfähigkeit $\leq$ 0,085 W/(mK) und eine Druckfestigkeit von zumindest 1,6 N/mm$^2$, wobei eine Gießmasse hergestellt wird aus mindestens einer im Hydrothermalprozess reagierenden CaO-Komponente, insbesondere aus gebranntem Kalk, mindestens einem Zement, mindestens einer im Hydrothermalprozess reagierenden SiO$_2$-Komponente, insbesondere in Form von Quarzmehl, mindestens einer Calciumsulfatkomponente und mindestens einem Treibmittel in Form einer Aluminiumkomponente, sowie Wasser, die gießfähige Masse in eine Form gegossen zum Auftreiben und Ansteifen zu einem grünen Kuchen gebracht wird, anschließend der Kuchen zu Formkörpern geschnitten wird und die Formkörper im Autoklaven gehärtet werden, **dadurch gekennzeichnet, dass** eine Gießmasse verwendet wird, die ein Zusatzmittel zur Verhinderung der Sedimentation von Gießmassenfeststoffen enthält, die SiO$_2$-Komponente zu mehr als 50 Gew.-% eine feinteilige SiO$_2$-Komponente mit spezifischen Oberflächen zwischen 8000 und 30000 cm$^2$/g, gemessen nach Blaine, aufweist und der Wasser/Feststoffwert zwischen 1,0 und 1,4 liegt, wobei als Mittel zur Verhinderung der Sedimentation Polysaccharide und/oder Polyethylenglycol und/oder Polyethylenoxid und/oder Melaminharzderivate in Mengen bis 2 Gew.-%, bezogen auf den Feststoffgehalt der Gießmasse, verwendet wird.

2. Verfahren nach Anspruch 1, **dadurch gekennzeichnet, dass** das Mittel zur Verhinderung der Sedimentation in Mengen von 0,2 bis 0,8 Gew.-%, bezogen auf den Feststoffgehalt der Gießmasse, verwendet wird.

3. Verfahren nach Anspruch 1 oder 2, **dadurch gekennzeichnet, dass** als SiO$_2$-Komponente Quarzmehl verwendet wird, insbesondere mit spezifischen Oberflächen zwischen 10000 und 12000 cm$^2$/g, gemessen nach Blaine.

4. Verfahren nach einem der vorhergehenden Ansprüche, **dadurch gekennzeichnet, dass** ein Porenbetonformkörper mit einer A-Zahl zwischen 2000 und 2600, insbesondere zwischen 2200 und 2400, hergestellt wird.

5. Verfahren nach einem der vorhergehenden Ansprüche, **dadurch gekennzeichnet, dass** ein Porenbetonformkörper mit einer Wärmeleitfähigkeit unter 0,080, insbesondere unter 0,072 W/(mK), hergestellt wird.

6. Verfahren nach Anspruch 5, **dadurch gekennzeichnet, dass** ein Porenbetonformkörper mit Druckfestigkeiten zwischen 2,0 und 2,4 N/mm$^2$ hergestellt wird.

**Claims**

1. A method for the production of an unreinforced, aluminium-expanded autoclaved aerated concrete shaped article without the use of aluminium sulfate, substantially consisting of a calcium silicate hydrate skeleton, in particular a tobermorite skeleton, and pores and having an A-value of more than 1600 as a relative compressive strength level, a thermal conductivity of $\leq$ 0.085 (W/mK) and a compressive strength of at least 1.6 N/mm$^2$, wherein a casting compound is produced from at least one CaO component reacting in a hydrothermal process, in particular from burnt lime, at least one cement, at least one SiO$_2$ component reacting in a hydrothermal process, in particular in the form of quartz flour, at least one calcium sulfate component and at least one expansion agent in the form of an aluminium component, as well as water, the castable compound poured into a mould is brought to rise and stiffen to form a green cake, the cake is then cut into shaped articles and the shaped articles are hardened in an autoclave, **characterised in that** a casting compound is used which contains an admixture for preventing the sedimentation of casting compound

solids, the SiO$_2$ component comprises more than 50 wt.% of a finely divided SiO$_2$ component having specific surface areas of between 8000 and 30000 cm$^2$/g, measured according to the Blaine method, and the water/solids ratio is between 1.0 and 1.4, wherein polysaccharides and/or polyethylene glycol and/or polyethylene oxide and/or melamine resin derivatives are used in quantities of up to 2 wt.%, based on the solids content of the casting compound, as the agent for preventing sedimentation.

2. The method according to claim 1,
**characterised in that**
the agent for preventing sedimentation is used in quantities of 0.2 to 0.8 wt.%, based on the solids content of the casting compound.

3. The method according to claim 1 or 2,
**characterised in that**
quartz flour is used as the SiO$_2$ component, in particular with specific surface areas of between 10000 and 12000 cm$^2$/g, measured according to the Blaine method.

4. The method according to one of the previous claims,
**characterised in that**
an autoclaved aerated concrete shaped article having an A-value of between 2000 and 2600, in particular between 2200 and 2400, is produced.

5. The method according to one of the previous claims,
**characterised in that**
an autoclaved aerated concrete shaped article having a thermal conductivity below 0.080, in particular below 0.072 W/mK, is produced.

6. The method according to claim 5,
**characterised in that**
an autoclaved aerated concrete shaped article having a compressive strengths of between 2.0 and 2.4 N/mm$^2$, is produced.

**Revendications**

1. Procédé de production d'un corps moulé en béton non armé, poreux, développé avec de l'aluminium, sans utilisation de sulfate d'aluminium, constitué essentiellement d'une armature d'hydrate de silicate de calcium, en particulier d'une armature de tobermorite, et de pores et présentant comme niveau de résistance à la pression relatif un indice A supérieur à 1600, une conductibilité thermique ≤ 0,085 (W/mK) et une résistance à la pression d'au moins 1,6 N/mm$^2$, dans lequel une masse de coulée est produite à partir d'au moins un composant de CaO réagissant dans un processus hydrothermique, en particulier à partir de chaux vive, d'au moins un ciment, d'au moins un composant de SiO$_2$ réagissant dans le processus hydrothermique, en particulier sous la forme de poudre de quartz, d'au moins un composant de sulfate de calcium et d'au moins un agent propulseur sous la forme d'un composant d'aluminium et d'eau, la masse pouvant être coulée est versée dans un moule pour un développement et une prise en un gâteau brut, le gâteau est ensuite découpé en corps moulés et les corps moulés sont durcis en autoclave,
**caractérisé en ce que**
l'on utilise une masse coulée qui contient un additif pour empêcher la sédimentation de solides de masse coulée, le composant de SiO$_2$ présente à plus de 50 % en poids, un composant de SiO$_2$ à fines particules comportant une surface spécifique comprise entre 8000 et 30000 cm2/g, mesurée selon Blaine, et la valeur eau/solide se situe ente 1,0 et 1,4, dans lequel on utilise comme moyen pour empêcher la sédimentation, des polysaccharides et/ou un polyéthylène glycol et/ou de l'oxyde de polyéthylène et/ou des dérivés de résine de mélamine en quantités jusqu'à 2 % en poids, par rapport à la teneur en solide de la masse coulée.

2. Procédé selon la revendication 1,
**caractérisé en ce que**
le moyen pour empêcher la sédimentation est utilisé en quantité de 0,2 à 0,8 % en poids par rapport à la teneur en solide de la masse coulée.

3. Procédé selon la revendication 1 ou 2,

**caractérisé en ce que**

l'on utilise comme composant de $SiO_2$, de la poudre de quartz, en particulier présentant une surface spécifique comprise entre 10000 et 12000 $cm^2$/g, mesurée selon le test de Blaine.

4. Procédé selon une des revendications précédentes,
**caractérisé en ce que**
un corps moulé en béton poreux présentant un indice A compris entre 2000 et 2600, en particulier entre 2200 et 2400, est fabriqué.

5. Procédé selon une des revendications précédentes,
**caractérisé en ce que**
un corps moulé en béton poreux présentant une conductibilité thermique inférieure à 0,080, en particulier inférieure à 0,072 W/mK, est fabriqué.

6. Procédé selon la revendication 5,
**caractérisé en ce qu'il présente**
un corps moulé en béton poreux présentant des résistances à la pression comprise entre 2,0 et 2,4 $N/mm^2$, est fabriqué.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 2163534 A1
- DE 60127307 T2

### In der Beschreibung aufgeführte Nicht-Patentliteratur

- **SIEGFRIED G. ZÜRN.** *Einfluss der Sandminerale auf die Bildung von Calciumsilikathydraten (CSH-Phasen), das Gefüge und die mechanischen Eigenschaften von Porenbetonprodukten,* 1997, IS-BN 978-3-89722-012-6